(19) **Europäisches Patentamt / European Patent Office / Office européen des brevets**

(11) **EP 1 032 241 B1**

(12) **EUROPEAN PATENT SPECIFICATION**

(45) Date of publication and mention
of the grant of the patent:
**05.10.2011 Bulletin 2011/40**

(51) Int Cl.:
*H04Q 11/04* (2006.01)  *H04L 12/56* (2006.01)

(21) Application number: **00301399.2**

(22) Date of filing: **22.02.2000**

(54) **Method and system for switching using an arbitrator**

Methode und System zur Übermittlung, mit Verwendung eines Arbiters

Méthode et système de commutation, utilisant un arbitre

(84) Designated Contracting States:
**AT BE CH CY DE DK ES FI FR GB GR IE IT LI LU MC NL PT SE**

(30) Priority: **22.02.1999 US 255197**

(43) Date of publication of application:
**30.08.2000 Bulletin 2000/35**

(73) Proprietor: **Ericsson AB
164 80 Stockholm (SE)**

(72) Inventors:
• **Zhou, Fan
Cranberry, PA 16066 (US)**
• **Adam, Joel
Cupertino, CA 95014 (US)**
• **Kantz, Joseph C.
Beaver Falls, PA 15010 (US)**
• **Reddy, Veera A.
Wexford, PA 15090 (US)**

(74) Representative: **O'Connell, David Christopher et al
Haseltine Lake LLP
Redcliff Quay
120 Redcliff Street
Bristol BS1 6HU (GB)**

(56) References cited:
**US-A- 5 745 489    US-A- 5 748 629
US-A- 5 768 257**

**Description**

<u>FIELD OF THE INVENTION</u>

The present invention is related to multi level dequeuing of traffic in switching networks when multiple sources and destinations are involved, with each source having traffic destined to different destinations over mutiple prioritized queues. Any scheme that is fair in resource allocation can be used for selection of different prioritized queues. The multi level dequeuing is especially useful for high bandwidth network applications, which makes it feasible to implement scalable switches with current technology.

<u>BACKGROUND OF THE INVENTION</u>

In high speed switching networks, the switch design involves collecting and queuing of incoming traffic, for example packets or asynchronous transfer mode (ATM) cells, from many sources, for example physical media. Each source could have traffic destined for different destinations over different priorities. Incoming traffic is queued based on either per destination or per destination and per priority queue. As the number of sources and destinations increase, and/or as each source and destination traffic bandwidth increases it becomes increasingly difficult to build a switching module that can switch by queuing and dequeuing traffic at very high bandwidths. The technology limitations would make it impossible to build switches beyond certain bandwidth with single level of queuing and dequeing. US 5,745,489 is an example of such a prior art switching system.

The purpose of the present invention is to build network switches that can scale to any bandwidth by using multi node queuing and multi level dequeuing. Each switch comprises one or more queuing/dequeuing segments which each run at only a fraction of the total bandwidth and an arbitrator arranged to collect information from all queues of each lower level dequeuing segment and by processing the information from different segments based on a certain algorithm, for example a weighted round robin algorithm, it will give back dequeuing information to each segment. The arbitrator needs to receive only enough information from all its lower level segments for a current dequeuing interval. For each lower level segment the arbitrator can receive information from both the queuing logic and the destination of the traffic. The approach can be extended to any number of dequeuing levels by giving enough time to transfer the data from the buffer queues to the destinations.

<u>SUMMARY OF THE INVENTION</u>

According to a first aspect of the invention a switch for switching traffic from N sources to M destinations, where M and N are each an integer greater than or equal to 2, comprises K segments, where K is greater than or equal to 2 and is an integer, each segment being arranged to receive traffic from R of the N sources, where $1 \leq R < N$ and is an integer, all K segments in total being arranged to receive traffic from the N sources, and each segment is arranged to collect and queue traffic from the respective R sources, and an arbitrator arranged to receive information from the destinations regarding if they can receive data or not, and from the K segments about the traffic they have for different destinations.

Each segment may include input ports, each having a line rate L1, which receive traffic from corresponding sources, the arbitrator may include output ports each having a line rate L2 and a combination of an input port and an output port together may form a queue/dequeue node having a bandwidth of N/K * L1 + M * L2. Each segment may have at least one queue associated with a destination and in which each is arranged to store traffic received at its input ports for its corresponding destinations. Each segment may have a controller which places traffic received at an input port into a queue corresponding with the traffic's destinations.

The traffic in a queue may either be a unicast connection type or a multicast connection type.

The arbitrator may comprise a arbitrator controller arranged to select which destination is to receive traffic from a corresponding source and allows the traffic to flow through an output port to a destination. The arbitrator may select a destination, then an associated queue having traffic for that destination and dequeue the traffic in the associated queue to the destination through an output port. The arbitrator may have dequeuing intervals in which traffic is sent to destinations and wherein each segment sends the arbitrator buffer occupancy information for all destinations and queues for each dequeuing interval of the arbitrator. The arbitrator may comprise arbitrator portions, each arbitrator portion associated with predetermined segments and the arbitrator portions and segments form a hierarchy. The arbitrator may select a destination according to either a weighted round robin or a strict round robin routine.

Preferably, the queues are priority queues.

According to a second aspect of the invention a method of switching traffic from N sources to M destinations, where M and N are each an integer greater than or equal to 2, includes receiving traffic from the N sources at input ports of K segments, where K is greater than or equal to 2 and is an integer, each segment receiving traffic from R of the N sources where $1 \leq R < N$ and is an integer, and sending traffic from any segment to a destination through an output port of an arbitrator which connects to each segment.

The method may include receiving traffic at an input port having a line rate of L1 and sending traffic from an output port of the arbitrator at a line rate of L2, wherein the combination of an input port and an output port together form a queue/dequeue node having a bandwidth of N/K * L1 + M * L2. The method may include placing traffic received at an input port into a queue in the segment corresponding with the traffic destination. It may also include, after the receiving traffic, selecting a destination using the arbitrator. Also it may including, after selecting a destination, selecting a queue within a segment associated with the selected destination. Furthermore, it may include, after selecting a queue, selecting a unicast or multicast connection within the queue. The method may also include, after selecting a connection, selecting a segment with traffic for the connection.

According to a further aspect of the invention an arbitrator arranged to receive information from M destinations regarding if they can receive data or not arising from N sources, and from K segments about the traffic they have for different destinations arising from the N sources, each segment having input ports having a line rate L1, where K, M and N are each an integer greater than or equal to 2, comprises output ports each having a line rate L2 and a combination of an input port and an output port together form a queue/dequeue node having a bandwidth of N/K * L1+ M * L2, and an arbitrator controller arranged to select which destination is to receive traffic from a corresponding source and to allow the traffic to flow through an output port to the destination.

Preferably, the controller may define the queuing intervals in which traffic is sent to destinations and the controller receives buffer occupancy information from each segment for all destinations. The controller may select a destination according to either a weighted round robin or a strict round robin routine.

According to a further aspect of the invention there is provided a segment suitable for use with a switch.

BRIEF DESCRIPTION OF THE DRAWINGS

In the accompanying drawings, the preferred embodiment of the invention and preferred methods of practicing the invention are illustrated, by way of example only, in which:

Figure 1 is a schematic representation of a switch according to the present invention.

Figure 2 is a schematic representation of a switch according to the present invention.

Figure 3 is a flow chart of a method according to the present invention.

DETAILED DESCRIPTION

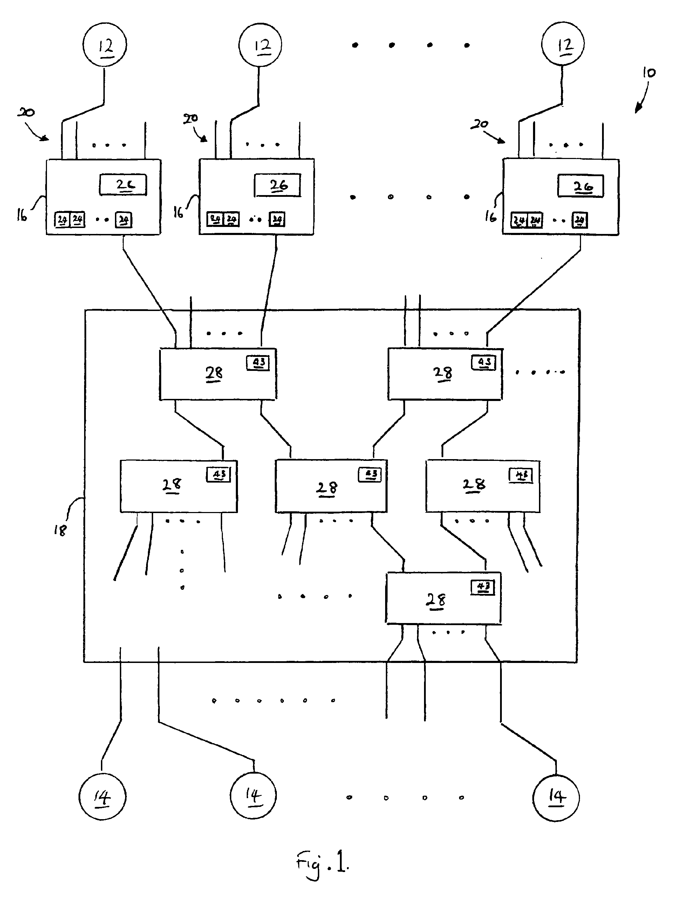

Referring now to the drawings, wherein like reference numerals refer to similar or identical parts throughout the several views, and more specifically to Figure 1 thereof, there is shown a switch 10 for switching traffic from N sources 12 to M destinations 14, where M and N are each an integer greater than or equal to 2. The switch 10 comprises K segments 16, where K is greater than or equal to 2 and is an integer. Each segment 16 receives traffic from R of the N sources 12, where $1 \leq R < N$ and is an integer, and all K segments 16 in total receive traffic from the N sources 12. Each segment 16 collects and queues traffic from the respective R sources 12. The switch 10 comprises an arbitrator 18 which receives information from the destinations 14 regarding if they can receive data or not, and from the K segments 16 about the traffic they have for different destinations 14.

Preferably, each segment 16 includes input ports 20, each having a line rate L1, which receive traffic from corresponding sources 12. Preferably, the arbitrator 18 includes output ports 22 each having a line rate L2, and a combination of an input port 20 and an output port 22 together form a queue/dequeue node having a bandwidth of N/K * L1 + M * L2. Each segment 16 preferably has queues 24 associated with destinations 14 which store traffic received at the input ports 20 for the destinations 14.

Preferably, each segment 16 has a controller 26 which places traffic received at an input port 20 into a queue 24 corresponding with the traffic's destinations 14. Traffic in a queue 24 is preferably either a unicast connection type or a multicast connection type. Preferably, the arbitrator 18 selects a destination and then an associated queue 24 having traffic for that destination 14, and dequeues the traffic in the associated queue 24 to the destination through an output port 22.

The arbitrator 18 preferably has dequeuing intervals in which traffic is sent to destinations 14 and wherein each segment 16 sends the arbitrator 18 buffer occupancy information for all destinations 14 and queues 24 for each dequeuing interval of the arbitrator 18. Preferably, the arbitrator 18 comprises arbitrator portions 28, each arbitrator portion 28 associated with a predetermined segment 16 and the arbitrator portions 28 and segments 16 form a hierarchy.

The arbitrator 18 preferably selects a destination 14 according to either a weighted round robin or a strict round robin routine. Preferably, the queues 24 are priority queues 24.

The present invention also pertains to a method for switching traffic from N sources 12 to M destinations 14, where M and N are each an integer greater than or equal to 2. The method comprises receiving traffic from the N sources 12 at input ports 20 of K segments 16, where K is greater than or equal to 2 and is an integer. Each segment 16 receives traffic from R of the N sources 12 where $1 \leq R < N$ and is an integer. Then traffic is sent from any segment 16 to a destination through an output port 22 of an arbitrator 18 which connects to each segment 16.

Preferably, traffic is received at an input port 20 having a line rate of L1 and traffic is sent from an output port 22 of the arbitrator 18 at a line rate of L2. A combination of an input port 20 and an output port 22 together form a queue/dequeue node having a bandwidth of N/K * L1 + M * L2. Preferably traffic received at an input port 20 is placed in a queue 24 in the segment 16 corresponding with the traffic destination.

A destination 14 and a queue 24 associated with the destination 14 is selected by the arbitrator 18. After a queue 24 has been selected, the arbitrator 18 selects either a unicast or a multicast connection within the queue 24 and selects a segment 16 with traffic for the connection.

The present invention also pertains to an arbitrator 18 which receives information from M destinations 14 regarding if they can receive data or not arising from N sources 12, and from K segments 16 about the traffic they have for different destinations 14 arising from the N sources 12. Each segment 16 has input ports 20 having a line rate L1, where K, M and N are each an integer greater than or equal to 2. The arbitrator 18 comprises output ports 22 each having a line rate L2, and a combination of an input port 20 and an output port 22 together form a queue/dequeue node having a bandwidth of N/K * L1+ M * L2. The arbitrator 18 comprises an arbitrator controller 43 that selects which destination 14 is to receive traffic from a corresponding source and allows the traffic to flow through an output port 22 to the destination 14.

Preferably, the arbitrator controller 43 defines the queuing intervals in which traffic is sent to destinations 14 and the arbitrator controller 43 receives buffer occupancy information from each segment 16 for all destinations. The arbitrator controller 43 preferably selects a destination according to either a weighted round robin or a strict round robin routine.

Furthermore, the present invention pertains to a segment 16 which receives traffic from R of N sources 12, where 1 is less than or equal to R which is less than N and is an integer, and N is an integer greater than or equal to 2. The segment 16 comprises input ports 20, each having a line rate L1, which receive traffic from the respective R sources 12. The segment 16 comprises queues 24 associated with destinations 14 and are arranged to store traffic received at the input ports 20 for the destinations 14.

Preferably, the segment includes a controller 26 which places traffic received at an input port 20 into a queue 24 corresponding with the traffic's destinations. Traffic in a queue 24 can preferably be either a unicast connection type or a multicast connection type. Preferably, the queues 24 are priority queues.

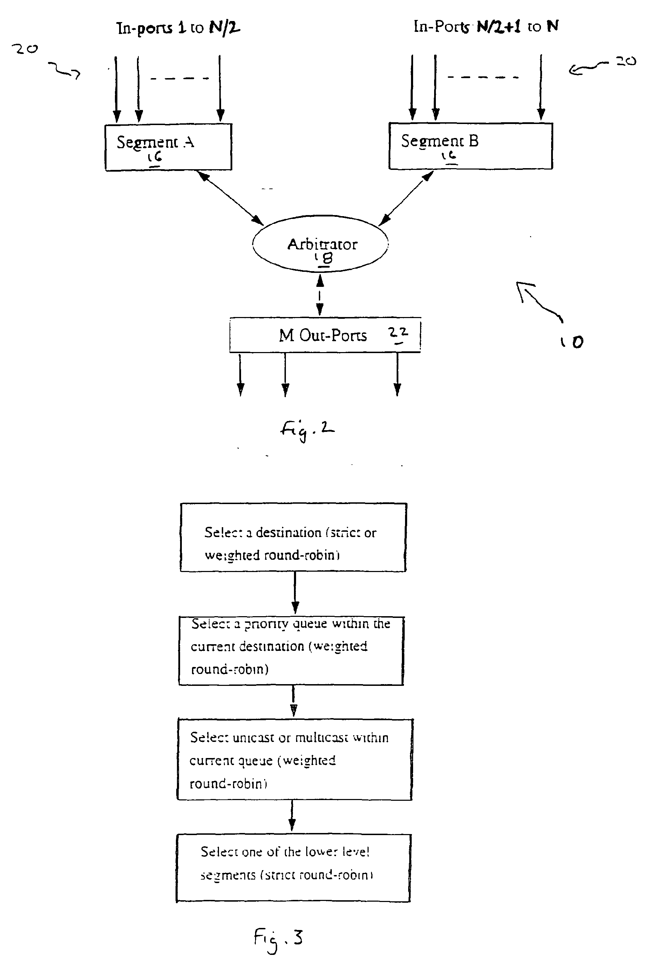

In the operation of the invention, and referring to Figure 2, the following describes the approach with a single level arbitrator 18 with two segments 16. It should be noted that the arbitrator 18 can be extended to any number of levels. Suppose there is traffic coming from N sources 12 into a network switch node, and after it is appropriately queued and dequeued it goes to M destinations 14. Traffic queued in different prioritized queues 24 from each input port 20 can go to any one (unicast connections) or more (multicast connections) of the M output ports 22. With one level of arbitrator 18 each of the two segments 16 collects and queues the traffic from N/2 sources 12. This is in contrast to single point queuing and dequeuing where it is necessary to queue and dequeue traffic from N sources 12. The queuing approach used in this instance is per destination and per priority queue for a destination. The arbitrator 18, based on a fixed algorithm described in detail below, dequeues for each dequeue interval.

The arbitrator 18 receives information from the destinations 14 regarding if they can receive data or not, and from the two segments 16 about the buffer occupancy for different destinations 14 and priority queues 24. Each segment 16 can send the arbitrator 18 only enough information for the current dequeuing interval about its buffer occupancy for all destinations 14 and queues 24. The arbitrator 18 selects the destination 16 first, then a queue 24 associated with that destination 16, and then one of the two segments 16, using, for example, a weighted round-robin routine at each level. Once the arbitrator 18 makes the final decision it will send the required dequeue command to the appropriate segment 16. For example, if the input ports 20 have a line rate of L1, and the output ports 22 have a line rate of L2, then the bandwidth capability required at each queue/dequeue node with single point dequeuing and multi level dequeuing as proposed above would be:

$$N * L1 + M * L2$$

The bandwidth for a multi level queue/dequeue with two segments 16 it would be:

$$N/2 * L1 + M * L2$$

The bandwidth for a multi level queue/dequeue with four segments 16 it would be:

$$N/4 * L1 + M * L2$$

Extending this to k segments 16, a multi level queue/dequeue with k segments 16, the bandwidth would be:

$$N/k * L1 + M * L2$$

This clearly shows that with segmented queuing/dequeuing each queue/dequeue node need only support a fraction of the total bandwidth, which makes it feasible to build high speed scalable switching networks. Also, with a multi level arbitrator 18, the arbitrator 18 design can be made simpler.

Any fair algorithm can be used to implement the dequeue algorithm within the arbitrator 18. The algorithm has to be fair in allocating the bandwidth not only across destinations 14 and priority queues 24 associated with each destination, but across the different segments 16. A novel algorithm for an arbitrator 18 design is explained below with reference to Figure 3.

If all destinations 14 have the same bandwidth capacity then a destination is selected using a strict round-robin routine. Alternatively, a destination can be selected using a weighted round-robin routine. If a selected destination does not have traffic to be dequeued then that dequeue interval could be wasted. Accordingly, after selecting a destination, a priority queue 24 associated with that destination is selected using a weighted round-robin routine. If the selected queue does not have traffic to be dequeued in all of the lower level segments 16, then the queue 24 next in priority will be selected until a queue 24 with traffic queued is found. After selecting a priority queue, a unicast or multicast connection type is selected within that priority queue 24, based on a weighted round-robin routine. If the selected connection type does not have traffic queued in all of the lower level segments 16 then another connection type will be selected. Multiple weights can be used in selecting a connection type, based on the queuing algorithm used for queuing incoming traffic, and the current congestion state of all lower level segments 16. After selecting a connection type, one of the lower level segments 16 is selected using a strict round-robin routine until a segment 16 with traffic queued for the selected destination, priority queue, and connection type is found.

For an ATM switching node with N high speed input ports 20, and M high speed output ports 22, the memory bandwidth required for ATM cell queuing from N ports and ATM cell dequeuing to M ports could be prohibitively high to implement it as a single point queuing and dequeuing. The current memory technology may not make it feasible to implement such single point queuing and dequeuing logic. In such a situation, the queuing could be segmented and using an arbitrator 18 approach dequeuing can be extended to any number of levels as required, making it feasible to implement a scalable switching node that can scale to any aggregate bandwidth.

## Claims

1. A switch (10) for high speed switching networks for switching traffic from N sources (12) to M destinations (14), where M and N are each an integer greater than or equal to 2 comprising:

   K segments (16), where K is greater than or equal to 2 and is an integer, each segment being arranged to receive traffic from R of the N sources (12), where $1 \leq R < N$ and is an integer, and all K segments (16) in total being arranged to receive traffic from the N sources (12), each segment being arranged to collect and queue traffic from the respective R sources (12); and
   **characterized by**
   an arbitrator (18) connected to each of the segments (16) and being arranged to receive information from the destinations (14) regarding if they can receive data or not, and from the K segments (16) about the traffic they have for different destinations (14), and for sending traffic from any segment (16) to a destination (14) through an output port (22) of the arbitrator (18).

2. A switch (10) as described in Claim 1 **characterized by** the fact that each segment includes input ports (20), each having a line rate L1, adapted to receive traffic from corresponding sources (12), and the arbitrator (18) includes output ports (22) each having a line rate L2 and a combination of an input port and output port together form a queue/dequeue node having a bandwidth of N/K * L1 + M * L2.

3. A switch (10) as described in Claim 2 **characterized by** the fact that each segment has queues (24) associated with destinations (14) which are arranged to store traffic received at the input ports (20) for the destinations (14).

4. A switch (10) as described in Claim 3 **characterized by** the fact that each segment has a controller (26) adapted to place traffic received at an input port into a queue corresponding with the traffic's destinations (14).

5. A switch (10) as described in Claim 4 **characterized by** the fact that traffic in a queue can be either a unicast connection type or a multicast connection type.

6. A switch (10) as described in Claim 5 **characterized by** the fact that the arbitrator (18) is adapted to select a destination and then an associated queue having traffic for that destination, and to drequeue the traffic in the associated queue with the destination through an output port.

7. A switch (10) as described in Claim 6 **characterized by** the fact that the arbitrator (18) has dequeueing intervals in which traffic is sent to destinations (14) and wherein each segment is adapted to send the arbitrator (18) buffer occupancy information for all destinations (14) and queues (24) for each dequeueing interval of the arbitrator (18).

8. A switch (10) as described in Claim 7 **characterized by** the fact that the arbitrator (18) comprises arbitrator portions (28), each arbitrator portion (28) being associated with predetermined segments (16) and the arbitrator portions (28) and the segments (16) forming a hierarchy.

9. A switch (10) as described in Claim 8 **characterized by** the fact that the arbitrator (18) is adapted to select a destination according to either weighted round robin or strict round robin.

10. A switch (10) as described in Claim 9 **characterized by** the fact that the queues (24) are priority queues (24).

11. A method for switching traffic from N sources (12) to M destinations (14) for high speed switching networks where M and N are each an integer greater than or equal to 2, comprising the steps of:

receiving traffic from the N sources (12) at input ports (20) of K segments (16), where K is greater than or equal to 2 and is an integer, each segment (16) receiving traffic from R of the N sources (12) where 1. R < N and is an integer; each segment collecting and queueing traffic from the respective R sources and **characterized by** sending traffic from any segment (16) to a destination (14) through an output port (22) of an arbitrator (18) which connects to each segment (16), the arbitrator (18) receiving information from the destinations regarding if they can receive data or not and from the K segments about the traffic they have for different destinations.

12. A methods as described in Claim 11 **characterized by** the fact that the receiving step includes the step of receiving traffic at an input port having a line rate of L1 and the sending step includes the step of sending traffic from an output port of the arbitrator (18) at a line rate of L2, and a combination of an input port and output port together form a queue/dequeue node having a bandwidth of N/K * L1 + M * L2.

13. A method as described in Claim 12 **characterized by** the fact that the receiving step includes the step of placing traffic received at an input port into a queue in the segment corresponding with the traffic destination.

14. A method as described in Claim 13 including after the receiving step there is the step of selecting a destination by the arbitrator (18).

15. A method as described in Claim 14 including after the destination selecting step there is the step of selecting a queue within a segment associated with the selected destination.

16. A method as described in Claim 15 including after the queue selecting step there is the step of selecting a unicast or multicast connection within the queue.

17. A method as described in Claim 16 including after the connection selecting step there is the step of selecting a segment with traffic for the connection.

**Patentansprüche**

1. Vermittlungsstelle (10) für Hochgeschwindigkeitsvermittlungsnetze zum Vermitteln von Verkehr von N Quellen (12) zu M Zielen (14), wobei M und N jede eine Ganzzahl sind, die größer als oder gleich 2 ist, die Folgendes umfasst:

K Segmente (16), wobei K größer als oder gleich 2 ist und eine Ganzzahl ist, wobei jedes Segment angeordnet ist, um Verkehr von R der N Quellen (12) zu empfangen, wobei 1 ≤ R < N und eine Ganzzahl ist, und alle K Segmente (16) insgesamt angeordnet sind, um Verkehr von den N Quellen (12) zu empfangen, wobei jedes Segment angeordnet ist, um Verkehr von den entsprechenden R Quellen (12) zu erfassen und in eine Warteschlange einzureihen; und

**gekennzeichnet durch** einen Arbiter (18), der mit jedem der Segmente (16) verbunden ist und angeordnet ist, um Informationen von den Zielen (14), die sich darauf beziehen, ob sie Daten empfangen können oder nicht, und von den K Segmenten (16) über den Verkehr, den sie für verschiedene Ziele (14) aufweisen, zu empfangen, und um Verkehr **durch** einen Ausgangsanschluss (22) des Arbiters (18) von irgendeinem Segment (16) zu einem Ziel (14) zu senden.

2. Vermittlungsstelle (10) nach Anspruch 1, **dadurch gekennzeichnet, dass** jedes Segment Eingangsanschlüsse (20) umfasst, die jeder eine Leitungskapazität L1 aufweisen und angepasst sind, um Verkehr von entsprechenden Quellen (12) zu empfangen, und der Arbiter (18) Ausgangsanschlüsse (22) umfasst, die jeder eine Leitungskapazität L2 aufweisen, und eine Kombination eines Eingangsanschlusses und eines Ausgangsanschlusses zusammen einen Knoten zum Einreihen in/Entfernen aus eine/r Warteschlange bildet, der eine Bandbreite von N/K * L1 + M * L2 aufweist.

3. Vermittlungsstelle (10) nach Anspruch 2, **dadurch gekennzeichnet, dass** jedes Segment Warteschlangen (24) aufweist, die Zielen (14) zugehörig sind, die angeordnet sind, um an den Eingangsanschlüssen (20) für die Ziele (14) empfangenen Verkehr zu speichern.

**4.** Vermittlungsstelle (10) nach Anspruch 3, **dadurch gekennzeichnet, dass** jedes Segment ein Steuergerät (26) aufweist, das angepasst ist, um an einem Eingangsanschluss empfangenen Verkehr in einer Warteschlange unterzubringen, die den Zielen (14) des Verkehrs entspricht.

**5.** Vermittlungsstelle (10) nach Anspruch 4, **dadurch gekennzeichnet, dass** Verkehr in einer Warteschlange entweder ein Unicast-Verbindungstyp oder ein Multicast-Verbindungstyp sein kann.

**6.** Vermittlungsstelle (10) nach Anspruch 5, **dadurch gekennzeichnet, dass** der Arbiter (18) angepasst ist, um ein Ziel und dann eine zugehörige Warteschlange, die Verkehr für dieses Ziel aufweist, auszuwählen und um den Verkehr in der dem Ziel zugehörigen Warteschlange durch einen Ausgangsanschluss aus der Warteschlange zu entfernen.

**7.** Vermittlungsstelle (10) nach Anspruch 6, **dadurch gekennzeichnet, dass** der Arbiter (18) Warteschlangenentfernungsintervalle aufweist, in denen Verkehr zu Zielen (14) gesendet wird, und wobei jedes Segment angepasst ist, um Pufferbelegungsinformationen für alle Ziele (14) und Warteschlangen (24) für jedes Warteschlangenentfernungsintervall des Arbiters (18) an den Arbiter (18) zu senden.

**8.** Vermittlungsstelle (10) nach Anspruch 7, **dadurch gekennzeichnet, dass** der Arbiter (18) Arbiterabschnitte (28) umfasst, wobei jeder Arbiterabschnitt (28) Vorbestimmten Segmenten (16) zugehörig ist und die Arbiterabschnitte (28) und die Segmente (16) eine Hierarchie bilden.

**9.** Vermittlungsstelle (10) nach Anspruch 8, **dadurch gekennzeichnet, dass** der Arbiter (18) angepasst ist, entweder gemäß gewichtetem Round Robin oder strengem Round Robin ein Ziel auszuwählen.

**10.** Vermittlungsstelle (10) nach Anspruch 9, **dadurch gekennzeichnet, dass** die Warteschlangen (24) Prioritätswarteschlangen (24) sind.

**11.** Verfahren zur Vermittlung von Verkehr von N Quellen (12) zu M Zielen (14) für Hochgeschwindigkeitsvermittlungsnetze, wobei M und N jeweils eine Ganzzahl sind, die größer als oder gleich 2 ist, das die folgenden Schritte umfasst:

Empfangen von Verkehr von den N Quellen (12) an Eingangsanschlüssen (20) von K Segmenten (16), wobei K größer als oder gleich 2 ist und eine Ganzzahl ist, wobei jedes Segment (16) Verkehr von R der N Quellen (12) empfängt, wobei $1 \leq R < N$ und eine Ganzzahl ist, wobei jedes Segment Verkehr von den entsprechenden R Quellen erfasst und in eine Warteschlange einreiht,

und **gekennzeichnet durch**:

das Senden von Verkehr von irgendeinem Segment (16) zu einem Ziel (14) **durch** einen Ausgangsanschluss (22) eines Arbiters (18), der sich mit jedem Segment (16) verbindet, wobei der Arbiter (18) Informationen von den Zielen, die sich darauf beziehen, ob sie Daten empfangen können oder nicht, und von den K Segmenten über den Verkehr, den sie für verschiedene Ziele aufweisen, empfängt.

**12.** Verfahren nach Anspruch 11, **dadurch gekennzeichnet, dass** der Empfangsschritt den Schritt des Empfangens von Verkehr an einem Eingangsanschluss umfasst, der eine Leitungskapazität von L1 aufweist, und der Sendeschritt den Schritt des Sendens von Verkehr von einem Ausgangsanschluss des Arbiters (18) bei einer Leitungskapazität von L2 umfasst, und eine Kombination eines Eingangsanschlusses und Ausgangsanschlusses zusammen einen Knoten zum Einreihen in/Entfernen aus eine/r Warteschlange bildet, der eine Bandbreite von N/K * L1 + M * L2 aufweist.

**13.** Verfahren nach Anspruch 12, **dadurch gekennzeichnet, dass** der Empfangsschritt den Schritt des Unterbringens von an einem Eingangsanschluss empfangenem Verkehr in einer Warteschlange in dem Segment umfasst, das dem Ziel des Verkehrs entspricht.

**14.** Verfahren nach Anspruch 13, das nach dem Empfangsschritt den Schritt des Auswählens eines Ziels durch den Arbiter (18) umfasst.

**15.** Verfahren nach Anspruch 14, das nach dem Schritt des Auswählens des Ziels den Schritt des Auswählens einer Warteschlange innerhalb eines dem ausgewählten Ziel zugehörigen Segments umfasst.

**16.** Verfahren nach Anspruch 15, das nach dem Schritt des Auswählens der Warteschlange den Schritt einer Unicast- oder Multicast-Verbindung innerhalb der Warteschlange umfasst.

**17.** Verfahren nach Anspruch 16, das nach dem Schritt des Auswählens der Verbindung den Schritt des Auswählens eines Segments mit Verkehr für die Verbindung umfasst.

**Revendications**

**1.** Commutateur (10) pour réseaux à commutation ultrarapide, destiné à commuter du trafic provenant de N sources (12) vers M destinations (14), M et N étant chacun un entier égal ou supérieur à 2, comprenant :

K segments (16), K étant un entier égal ou supérieur à 2, chaque segment étant conçu pour recevoir du trafic de R des N sources (12), R étant un entier avec 1 ≤ R < N, et tous les K segments (16) étant conçus au total pour recevoir du trafic des N sources (12), chaque segment étant conçu pour recueillir et mettre en file d'attente du trafic des R sources (12) respective

**caractérisé par** :

un moyen d'arbitrage (18) connecté à chacun des segments (16) et conçu pour recevoir en provenance des destinations (14) des informations indiquant si elles peuvent ou non recevoir des données et en provenance des K segments (16) des informations sur le trafic qu'ils ont pour différentes destinations (14) et pour envoyer du trafic d'un segment (16) quelconque vers une destination (14) par un port de sortie (22) du moyen d'arbitrage (18).

2. Commutateur (10) selon la revendication 1, **caractérisé en ce que** chaque segment comprend des ports d'entrée (20), qui possèdent chacun un débit de ligne L1 et qui sont conçus pour recevoir du trafic de sources (12) correspondantes, et **en ce que** le moyen d'arbitrage (18) comprend des ports de sortie (22), qui possèdent chacun un débit de ligne L2, une combinaison d'un port d'entrée et d'un port de sortie formant ensemble un noeud de gestion de file d'attente avec une bande passante de N/K * L1 + M * L2.

3. Commutateur (10) selon la revendication 2, **caractérisé en ce que** chaque segment possède des files d'attente (24) associées à des destinations (14), conçues pour stocker le trafic reçu sur les ports d'entrée (20) pour les destinations (14).

4. Commutateur (10) selon la revendication 3, **caractérisé en ce que** chaque segment possède un contrôleur (26) conçu pour placer le trafic reçu sur un port d'entrée dans une file d'attente correspondant aux destinations du trafic (14).

5. Commutateur (10) selon la revendication 4, **caractérisé en ce que** le trafic placé dans une file d'attente peut être soit du type connexion pour diffusion individuelle, soit du type connexion pour diffusion multiple.

6. Commutateur (10) selon la revendication 5, **caractérisé en ce que** le moyen d'arbitrage (18) est conçu pour sélectionner une destination puis une file d'attente associée contenant du trafic pour cette destination et pour sortir le trafic de la file d'attente associée à la destination, via un port de sortie.

7. Commutateur (10) selon la revendication 6, **caractérisé en ce que** le moyen d'arbitrage (18) possède des intervalles de sortie de file d'attente dans lesquels du trafic est envoyé aux destinations (14), chaque segment étant conçu pour envoyer au moyen d'arbitrage (18) des informations d'occupation de mémoire tampon pour toutes les destinations (14) et les files d'attente (24), pour chaque intervalle de sortie de file d'attente du moyen d'arbitrage (18).

8. Commutateur (10) selon la revendication 7, **caractérisé en ce que** le moyen d'arbitrage (18) comprend des moyens élémentaires d'arbitrage (28), chaque moyen élémentaire d'arbitrage (28) étant associé à des segments prédéterminés (16) et **en ce que** les moyens élémentaires d'arbitrage (28) et les segments (16) forment une hiérarchie.

9. Commutateur (10) selon la revendication 8, **caractérisé en ce que** le moyen d'arbitrage (18) est conçu pour sélectionner une destination sur la base d'un mécanisme de tourniquet avec pondération ou d'un mécanisme de tourniquet strict.

10. Commutateur (10) selon la revendication 9, **caractérisé en ce que** les files d'attente (24) sont des files d'attente par priorité (24).

11. Procédé de commutation de trafic pour réseaux à commutation ultrarapide, destiné à commuter du trafic provenant de N sources (12) vers M destinations (14), M et N étant chacun un entier égal ou supérieur à 2, comprenant l'étape consistant à :

recevoir du trafic en provenance des N sources (12) sur des ports d'entrée (20) de K segments (16), K étant un entier égal ou supérieur à 2, chaque segment (16) étant conçu pour recevoir du trafic de R des N sources (12), R étant un entier avec 1 ≤ R < N, chaque segment recueillant et mettant en file d'attente du trafic provenant des R sources respectives ;

**caractérisé par** l'étape consistant à :

envoyer du trafic d'un segment (16) quelconque vers une destination (14) via un port de sortie (22) d'un moyen d'arbitrage (18) qui se connecte à chacun des segments (16), le moyen d'arbitrage (18) recevant en provenance des destinations des informations indiquant si elles peuvent ou non recevoir des données et en provenance des K segments des informations sur le trafic qu'ils ont pour différentes destinations.

**12.** Procédé selon la revendication 11, **caractérisé en ce que** l'étape de réception comprend l'étape consistant à recevoir du trafic sur un port d'entrée ayant un débit de ligne L1 et **en ce que** l'étape d'envoi comprend l'étape consistant à envoyer du trafic par un port de sortie du moyen d'arbitrage (18) avec un débit de ligne L2, une combinaison d'un port d'entrée et d'un port de sortie formant ensemble un noeud de gestion de file d'attente avec une bande passante de N/K * L1 + M * L2.

**13.** Procédé selon la revendication 12, **caractérisé en ce que** l'étape de réception comprend l'étape consistant à placer du trafic reçu sur un port d'entrée dans une file d'attente dans le segment correspondant à la destination du trafic.

**14.** Procédé selon la revendication 13, comprenant après l'étape de réception une étape consistant à choisir une destination par le moyen d'arbitrage (18).

**15.** Procédé selon la revendication 14, comprenant après l'étape de sélection de la destination une étape consistant à sélectionner une file d'attente dans un segment associé à la destination sélectionnée.

**16.** Procédé selon la revendication 15, comprenant après l'étape de sélection d'une file d'attente une étape consistant à sectionner une connexion pour diffusion individuelle ou une connexion pour diffusion multiple dans la file d'attente.

**17.** Procédé selon la revendication 16, comprenant après l'étape de sélection de la connexion une étape consistant à sélectionner un segment ayant du trafic pour la connexion.

Fig. 1.

In-ports 1 to N/2          In-Ports N/2+1 to N

Segment A
16

Segment B
16

Arbitrator
18

M Out-Ports   22

Fig. 2

Select a destination (strict or weighted round-robin)

Select a priority queue within the current destination (weighted round-robin)

Select unicast or multicast within current queue (weighted round-robin)

Select one of the lower level segments (strict round-robin)

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5745489 A